# EUROPÄISCHE PATENTSCHRIFT

(11) **EP 3 755 973 B1**
(45) Veröffentlichungstag und Bekanntmachung des Hinweises auf die Patenterteilung: **01.06.2022**
(21) Anmeldenummer: 19708932.9
(22) Anmeldetag: 19.02.2019
(51) Int. Cl.: G01D 5/26, G01D 5/347

(54) **MASSELEMENT FÜR EINE OPTISCHE MESSVORRICHTUNG**
SCALE ELEMENT FOR AN OPTICAL MEASURING DEVICE
ÉLÉMENT DE MESURE POUR DISPOSITIF DE MESURE OPTIQUE

(30) Priorität: 21.02.2018 DE 102018103869
(43) Veröffentlichungstag der Anmeldung: 30.12.2020
(73) Patentinhaber: Physik Instrumente (PI) GmbH & Co. KG, 76228 Karlsruhe (DE)
(72) Erfinder: GLÖSS, Rainer, 76228 Karlsruhe (DE)
(74) Vertreter: Grünecker Patent- und Rechtsanwälte PartG mbB
(86) Internationale Anmeldenummer: PCT/DE2019/100157
(87) Internationale Veröffentlichungsnummer: WO 2019/161843

(56) Entgegenhaltungen:
- EP-A1- 2 367 058
- EP-A1- 2 930 472
- US-A1- 2004 263 846
- US-A1- 2007 114 370
- US-A1- 2017 146 402

## Beschreibung

Die Erfindung betrifft ein Maßelement für eine optische Messvorrichtung, welche zwei unterschiedliche Sensorsysteme, nämlich einen Inkrementalencoder und ein interferometrisches Sensorsystem, umfasst, gemäß den Ansprüchen 1 bis 4. Zudem betrifft die Erfindung eine Messvorrichtung mit einem solchen Maßelement. Schließlich betrifft die Erfindung eine Positioniervorrichtung mit einer solchen Messvorrichtung.

Messvorrichtungen zur Erfassung der Position und der Lage eines mehrere Freiheitsgrade aufweisenden Positionierelements verwenden in der Regel Sensorsysteme, die ein zugehöriges Maßelement aufweisen. Die Sensorsysteme können hierbei nach kapazitiven, induktiven oder optischen Prinzipien funktionieren. Wenn der Messbereich des Sensorsystems die geforderte Auflösung um mehr als den Faktor 100.000 überschreitet, sind inkrementelle Systeme notwendig. Bei Auflösungen im Nanometer- oder Pikometer-Bereich kommen für gewöhnlich optisch-inkrementelle Sensorsysteme zum Einsatz.

Bei Messvorrichtungen zur Erfassung der Position und der Lage eines Positionierelements bezüglich drei Freiheitsgraden, nämlich Translation in den beiden senkrecht zueinander und in derselben Ebene liegenden Richtungen X und Y und Drehung um die zu X und Y senkrechte Richtung Z, sind optische Inkrementalencoder von Vorteil, weil sie eine hohe Auflösung bei gleichzeitig großen Stellwegen zulassen. Die Sensorköpfe solcher Inkrementalencoder können so gestaltet sein, dass sie eine große Abstandstoleranz von einigen Millimetern zulassen. Sie ermöglichen damit den Einsatz weiterer inkrementeller Sensoren zur Ermittlung der Höhe bzw. des Abstandes an z.B. drei Punkten und damit auch der Verkippung des Positionierelements um die Achsen X und Y. Hierbei spricht man auch von der Erfassung oder Messung der Tip-Tilt-Position bzw. der Tip-Tilt-Winkel des Positionierelements.

Zur Ermittlung der Translation in Z-Richtung und der Tip-Tilt-Winkel eines Positionierelements werden vorzugsweise optisch-interferometrische Sensorsysteme verwendet. Mit solchen Sensorsystemen können Translationen oder Abstandsänderungen bzw. Verkippungen bis in den Pikometer-Bereich ermittelt werden.

Durch Kombination von optischen Inkrementalencodern und optisch-interferometrischen Sensorsystemen können beispielsweise die Translationen in drei Raumrichtungen (X, Y, Z) und die Rotationen um die drei Raumachsen X, Y und Z (d.h. die Kippwinkel- oder Tip-Tilt-Winkel und der Drehwinkel) der Plattform einer 6D-Positioniervorrichtung erfasst werden.

Bei optischen Inkrementalencodern umfasst das Maßelement normalerweise eine Maßverkörperung, die in der Regel gebildet ist durch ein im Wesentlichen zweidimensionales Gitter, auch 2D-Grid genannt, welches an einer Oberfläche des Maßelements oder an der Oberfläche des Positionierelements in Form einer Vielzahl von Punkten oder Dots angeordnet ist. An diesem Gitter bzw. 2D-Grid wird das Licht einer Lichtquelle des Inkrementalencoders reflektiert, wobei aus den Messsignalen des so reflektierten Lichts die Positionsänderung des Positionierelements bestimmbar ist. Die dritte Dimension der Maßverkörperung, nämlich deren Dicke bzw. die Dicke der einzelnen Dots, hat keinen bzw. nur vernachlässigbaren Einfluss auf die entsprechende Positionsmessung.

Bei optisch-interferometrischen Sensorsystemen umfasst das Maßelement normalerweise eine Reflexionsfläche, an welcher das Licht einer Lichtquelle des optisch-interferometrischen Sensorsystems reflektiert wird, wobei u.a. durch Laufzeitdifferenzen unterschiedlich geleiteter Lichtstrahlen auf eine Abstandänderung an der jeweiligen Messposition geschlossen werden kann.

EP2930472A1 offenbart ein Positionsmesssystem mit einer Inkrementalteilung in Bezug auf einen Messtisch.

Die US 7 292 312 B2 beschreibt eine optische Messvorrichtung zur Bewegungssteuerung bzw. -regelung eines Substrattischs, wobei die optische Messvorrichtung eine Kombination von wenigstens drei Interferometer-Encodersystemen aufweist, und jedes dieser Interferometer-Encodersysteme ein ein- oder zweidimensionales Encoder-Grid, einen optischen Sensor und ein Interferometer umfasst. Die Kombination der drei Interferometer-Encodersysteme liefert wenigstens sechs Positionswerte, mit deren Hilfe die Position und die Lage des Substrattischs ermittelt werden kann.

Die US 2004/0263846 A1 offenbart eine Messvorrichtung zur Erfassung der Position eines Maskentischs in zumindest einer Ebene, wobei die Messvorrichtung wenigstens einen optischen Encoder-Lesekopf umfasst, welcher mit einem entsprechenden, an dem Maskentisch angebrachten Beugungsgitter zusammenwirkt. Zur Erfassung weiterer Positionsdaten des Maskentischs schlägt die US 2004/0263846 A1 die Verwendung von kapazitiven oder optischen Abstandssensoren vor.

Bei einem kombinierten Sensorsystem umfassend einen optischen Inkrementalencoder und ein optisch-interferometrisches Sensorsystem ist denkbar, dass jedes der beiden Sensorsysteme gegen ein ihm eigenes und zugeordnetes Maßelement arbeitet bzw. misst. Aus Gründen der Kompaktheit und einer geringeren Komplexität ist es allerdings vorteilhafter, dass beide Sensorsysteme nur gegen ein gemeinsames Maßelement arbeiten bzw. messen. Wenn beide Sensorsysteme jedoch gegen die gleiche Oberfläche des Maßelements messen, an welcher sowohl die Maßverkörperung, als auch die Reflexionsschicht angeordnet ist, ergeben sich gewisse Nachteile. Diese sind in erster Linie darin begründet, dass die Messung des optisch-interferometrischen Sensorsystems durch die Maßverkörperung des Inkrementalencoders negativ beeinflusst wird. Denn bereits die geringe Dicke bzw. die schwankende Dicke entlang der Ausrichtung des zweidimensionalen Gitters beeinflusst die hochgenaue optisch-interferometrische Messung. So wird im Bereich eines reflektierenden Dots des zweidimensionalen Gitters bzw. XY-Gitters ein entsprechend der Höhe des Dots geringerer Abstand zwischen dem Sensorkopf des optisch-interferometrischen Sensorsystems und dem Maßelement bzw. dem Positionierelement gemessen als in dem Bereich zwischen zwei angrenzenden bzw. benachbarten Dots.

Dieses Problem umgeht die US 8 760 622 B2, indem sie vorschlägt, die Maßverkörperung des Inkrementalencoders an einer anderen Oberfläche des Positionierelements vorzusehen als an der Oberfläche, welche der Reflexion des Lichts des interferometrischen Sensorsystems dient. Die entsprechend beabstandete Anordnung zwischen der Maßverkörperung und der Reflexionsoberfläche hat jedoch den Nachteil, dass das Abbe'sche Prinzip verletzt wird und zusätzlicher Raum für das Messsystem bereitgestellt werden muss. Weiterhin ist diese Anordnung nicht geeignet, um mit kleinen Sensorköpfen zum Messen des Abstandes innerhalb der Begrenzung des Inkrementalencoders zu bleiben.

Daher ist es Aufgabe der vorliegenden Erfindung, ein Maßelement für eine optische Messvorrichtung, welche die Kombination eines Inkrementalencoders und eines interferometrischen Sensorsystems umfasst, bereitzustellen, bei welcher sowohl der Inkrementalencoder, als auch das interferometrische Sensorsystem gegen die gleiche Oberfläche des Maßelements messen können, ohne dass die Messung des interferometrischen Sensorsystems durch die Maßverkörperung des Inkrementalencoders beeinflusst wird.

Diese Aufgabe wird gelöst durch ein Maßelement gemäß Anspruch 1, wobei die sich daran anschließenden Unteransprüche wenigstens zweckmäßige Weiterbildungen darstellen.

Das erfindungsgemäße Maßelement zeichnet sich dadurch aus, dass dieses an einer seiner Oberflächen eine Reflexionsschicht aufweist, die zum Zusammenwirken mit dem interferometrischen Sensorsystem vorgesehen ist, und das Maßelement weiterhin eine Maßverkörperung aufweist, die in einer von der Reflexionsschicht weg weisenden Richtung und beabstandet zu dieser angeordnet ist und zum Zusammenwirken mit dem Inkrementalencoder vorgesehen ist, wobei die Reflexionsschicht derart beschaffen ist, dass sie für Licht bestimmter Wellenlängen eines ersten Wellenlängenbereichs weitgehend durchlässig ist und für Licht anderer Wellenlängen eines zweiten Wellenlängenbereichs vollständig bzw. nahezu vollständig reflektierend wirkt, wobei sich der erste Wellenlängenbereich und der zweite Wellenlängenbereich voneinander unterscheiden.

Dadurch, dass die Maßverkörperung nicht in derselben Ebene wie die Reflexionsschicht, sondern von dieser in einer von der Reflexionsschicht weg weisenden Richtung beabstandet ausgebildet ist, kommt es zu keiner negativen Beeinflussung der mittels des interferometrischen Sensorsystems erfassten Messsignale durch die Maßverkörperung des Inkrementalencoders. Dies gelingt jedoch erst in Kombination mit der für Lichtwellenlängen partiell durchlässigen Reflexionsschicht, so dass die Wellenlängen des Inkrementalencoders eines ersten Wellenlängenbereichs durch die Reflexionsschicht nahezu ungehindert hindurchtreten können und erst von der darunter liegenden Maßverkörperung reflektiert werden, wohingegen die Wellenlängen des interferometrischen Sensorsystems eines zweiten Wellenlängenbereichs vollständig bzw. nahezu vollständig von der Reflexionsschicht reflektiert werden.

Es kann von Vorteil sein, dass die Maßverkörperung an der Oberfläche des Maßelements angeordnet ist, welche der mit der Reflexionsschicht versehenen Oberfläche gegenüberliegt. Hierdurch gelingt eine vergleichsweise einfache Herstellung des Maßelements.

Es kann ferner von Vorteil sein, dass das Maßelement ein Substrat aus einem glasartigen Material umfasst. Dadurch ist gewährleistet, dass die zu der Maßverkörperung durchdringende Wellenlänge des Inkrementalencoders nicht bzw. nur sehr geringfügig abgeschwächt wird.

Darüber hinaus kann es von Vorteil sein, dass das Substrat aus einem gehärteten Saphirglas besteht. Dieses kann bei Dicken bzw. Stärken von wenigen Zehntel Millimetern mit relativ großen Abmessungen hergestellt werden, ohne dass es bei seiner Verwendung zu nachteiligen Verformungen kommt.

Weiterhin kann es von Vorteil sein, dass die Oberfläche des Maßelements, an welchem die Reflexionsschicht angeordnet ist, eine Ebenheit von wenigen zehntel bis einigen Mikrometern aufweist, weil diese Oberfläche die Referenz zum interferometrischen Sensorsystem bildet. Der Aufwand für das sonst übliche Mapping der Ebenheitsfehler wird so minimiert.

Die Erfindung betrifft ebenso eine optische Messvorrichtung, insbesondere zur hochgenauen Positions- und/oder Lageerfassung eines Positionierelements, mit einem Inkrementalencoder, einem interferometrischen Sensorsystem und mit einem Maßelement nach einem der vorhergehenden Ansprüche.

Hierbei kann es von Vorteil sein, dass der Inkrementalencoder einen Lesekopf, eine erste Lichtquelle zum Emittieren von Licht einer ersten Wellenlänge, und die dem Lesekopf zugeordnete Maßverkörperung des Maßelements umfasst, und das interferometrische Sensorsystem einen Sensorkopf, eine zweite Lichtquelle zum Emittieren von Licht einer zweiten Wellenlänge, und die dem Sensorkopf zugeordnete Reflexionsschicht des Maßelements umfasst, wobei die Reflexionsschicht sowohl dem Lesekopf, als auch dem Sensorkopf zugewandt ist, und die Reflexionsschicht für das Licht der ersten Wellenlänge durchlässig ist und für das Licht der zweiten Wellenlänge reflektierend wirkt, wobei das interferometrische Sensorsystem von der Reflexionsschicht reflektiertes und von dem Sensorkopf detektiertes Licht der zweiten Wellenlänge zur Messung nutzt und der Inkrementalencoder von der Maßverkörperung reflektiertes und von dem Lesekopf detektiertes Licht der ersten Wellenlänge zur Messung nutzt.

Bevorzugt ist das Maßelement plattenförmig ausgebildet, und der Inkrementalencoder ist dazu eingerichtet, die Position und die Lage des Maßelements innerhalb der durch dieses aufgespannten Ebene zu erfassen. Weiterhin ist das interferometrische Sensorsystem bevorzugt dazu eingerichtet, die Position des Maßelements senkrecht zu der durch dieses aufgespannten Ebene und die Lage des Maßelements aufgrund einer Rotation um eine der zwei senkrecht zueinander und in der Ebene des Maßelements verlaufende Achsen zu erfassen.

Es kann sich als vorteilhaft erweisen, dass das interferometrische Sensorsystem wenigstens drei Sensorköpfe aufweist. Damit wird die Messung sowohl des Abstandes, als auch der Tip/Tilt-Winkel möglich.

Schließlich betrifft die Erfindung eine Positioniervorrichtung mit einem Positionierelement und einer optischen Messvorrichtung nach einem der vorhergehenden Ansprüche, wobei das Maßelement an dem Positionierelement angeordnet oder integraler Bestandteil des Positionierelements ist, und mittels der optischen Messvorrichtung auf die Position oder auf die Lage oder auf die Position und die Lage des Positionierelements geschlossen werden kann.

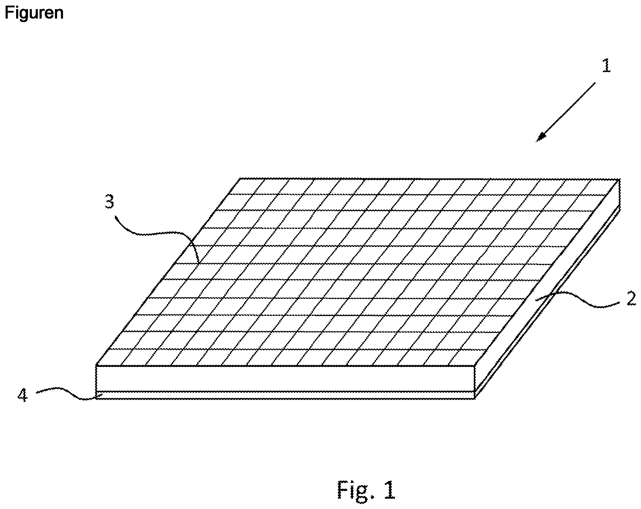

Ein Ausführungsbeispiel der Erfindung wird nachstehend anhand der beigefügten einzigen Figur 1 beschrieben. Diese zeigt ein erfindungsgemäßes Maßelement 1 mit einer plattenförmigen Geometrie. Das Substrat 2 besteht aus einem gehärteten Saphirglas. An der in Figur 1 nach oben weisenden Oberfläche des Substrats 2 ist eine Maßverkörperung 3 in Form eines zweidimensionalen Gitters bzw. eines 2D-Grids 3 vollflächig angeordnet. An der dem 2D-Grid 3 gegenüberliegenden Oberfläche des Substrats 2 ist eine Reflexionsschicht 4 angeordnet. Die Reflexionsschicht 4 weist eine hohe optische Reflexion bei einer Lichtwellenlänge von 1550nm und eine hohe Transmission bei einer Lichtwellenlänge von 640nm auf.

## Patentansprüche

1. Maßelement (1) für eine optische Messvorrichtung, die einen Inkrementalencoder und ein interferometrisches Sensorsystem umfasst, wobei das Maßelement (1) an einer seiner Oberflächen eine Reflexionsschicht (4) aufweist, die zu einem Zusammenwirken mit dem interferometrischen Sensorsystem vorgesehen ist, und das Maßelement (1) weiterhin eine Maßverkörperung (3) aufweist, die in einer von der Reflexionsschicht (4) weg weisenden Richtung und beabstandet zu dieser angeordnet ist und zu einem Zusammenwirken mit dem Inkrementalencoder vorgesehen ist, wobei die Maßverkörperung (3) so von der Reflexionsschicht (4) beabstandet angeordnet ist, dass keine negative Beeinflussung der mittels des interferometrischen Sensorsystems erfassten Messsignale durch die Maßverkörperung (3) auftritt, und die Reflexionsschicht (4) derart beschaffen ist, dass sie für Licht bestimmter Wellenlängen durchlässig ist und für Licht anderer Wellenlängen reflektierend wirkt.

2. Maßelement nach Anspruch 1, **dadurch gekennzeichnet, dass** die Maßverkörperung (3) an der Oberfläche des Maßelements (1) angeordnet ist, welche der mit der Reflexionsschicht (4) versehenen Oberfläche gegenüberliegt.

3. Maßelement nach Anspruch 1 oder 2, **dadurch gekennzeichnet, dass** das Maßelement (1) ein Substrat (2) aus einem glasartigen Material umfasst.

4. Maßelement nach Anspruch 3, **dadurch gekennzeichnet, dass** das Substrat (2) aus gehärtetem Saphirglas besteht.

5. Messvorrichtung, insbesondere zur hochgenauen Positions- und/oder Lageerfassung eines Positionierelements, aufweisend einen Inkrementalencoder, ein interferometrisches Sensorsystem und ein Maßelement nach einem der vorhergehenden Ansprüche.

6. Messvorrichtung nach Anspruch 5, **dadurch gekennzeichnet, dass** der Inkrementalencoder einen Lesekopf, eine erste Lichtquelle zum Emittieren von Licht einer ersten Wellenlänge, und die dem Lesekopf zugeordnete Maßverkörperung (3) des Maßelements (1) umfasst, und das interferometrische Sensorsystem einen Sensorkopf, eine zweite Lichtquelle zum Emittieren von Licht einer zweiten Wellenlänge, und die dem Sensorkopf zugeordnete Reflexionsschicht (4) des Maßelements (1) umfasst, wobei die Reflexionsschicht (4) sowohl dem Lesekopf, als auch dem Sensorkopf zugewandt ist, und die Reflexionsschicht (4) für das Licht der ersten Wellenlänge durchlässig ist und für das Licht der zweiten Wellenlänge reflektierend wirkt, wobei das interferometrische Sensorsystem das von der Reflexionsschicht (4) reflektierte und von dem Sensorkopf detektierte Licht der zweiten Wellenlänge zur Messung nutzt und der Inkrementalencoder von der Maßverkörperung (3) reflektiertes und von dem Lesekopf detektiertes Licht der ersten Wellenlänge zur Messung nutzt.

7. Messvorrichtung nach Anspruch 6, **dadurch gekennzeichnet, dass** das Maßelement (1) plattenförmig ist und der Inkrementalencoder dazu eingerichtet ist, die Position und die Lage des Maßelements (1) innerhalb der durch dieses aufgespannten Ebene zu erfassen, und das interferometrische Sensorsystem dazu eingerichtet ist, die Position des Maßelements (1) senkrecht zu der durch dieses aufgespannten Ebene und die Lage des Maßelements aufgrund einer Rotation um eine der zwei senkrecht zueinander und in der Ebene des Maßelements verlaufende Achsen zu erfassen.

8. Messvorrichtung nach einem der Ansprüche 5 bis 7, **dadurch gekennzeichnet, dass** das interferometrische Sensorsystem wenigstens drei Sensorköpfe aufweist.

9. Positioniervorrichtung mit einem Positionierelement und einer Messvorrichtung nach einem der vorhergehenden Ansprüche 5 bis 8, wobei das Maßelement (1) an dem Positionierelement angeordnet oder integraler Bestandteil des Positionierelements ist, und mittels der Messvorrichtung auf die Position oder auf die Lage oder auf die Position und die Lage des Positionierelements geschlossen werden kann.

## Claims

1. Scale element (1) for an optical measuring device comprising an incremental encoder and an interferometric sensor system, wherein the scale element (1) has a reflection layer (4) on one of its surfaces, which is provided for cooperation with the interferometric sensor system, and the scale element (1) further has a material measure (3), which is arranged in a direction away from and spaced apart from the reflection layer (4) and is provided for cooperation with the incremental encoder, wherein the material measure (3) is arranged spaced apart from the reflection layer (4) such that the measurement signals detected by the interferometric sensor system are not negatively influenced by the material measure (3), and the reflection layer (4) being such that it is transparent for light of certain wavelengths and reflective for light of other wavelengths.

2. Scale element according to claim 1, **characterized in that** the material measure (3) is arranged on the surface of the scale element (1) which is opposite to the surface provided with the reflection layer (4).

3. Scale element according to claim 1 or 2, **characterized in that** the scale element (1) comprises a substrate (2) of a glass-like material.

4. Scale element according to claim 3, **characterized in that** the substrate (2) consists of hardened sapphire glass.

5. Measuring device, in particular for high-precision position and/or location detection of a positioning element, comprising an incremental encoder, an interferometric sensor system and a scale element according to one of the preceding claims.

6. Measuring device according to claim 5, **characterized in that** the incremental encoder comprises a read head, a first light source for emitting light of a first wavelength, and the material measure (3) of the scale element (1) associated with the read head, and the interferometric sensor system comprises a sensor head, a second light source for emitting light of a second wavelength, and the reflection layer (4) of the scale element (1) associated with the sensor head, the reflection layer (4) facing both the read head and the sensor head, and the reflection layer (4) is transmissive for the light of the first wavelength and reflective for the light of the second wavelength, wherein the interferometric sensor system uses the light of the second wavelength reflected by the reflection layer (4) and detected by the sensor head for measurement, and the incremental encoder uses light of the first wavelength reflected by the measuring body (3) and detected by the reading head for measurement.

7. Measuring device according to claim 6, **characterized in that** the scale element (1) is plate-shaped and the incremental encoder is arranged to detect the position and the location of the scale element (1) within the plane defined by the scale element (1), and the interferometric sensor system is arranged to detect the position of the scale element (1) perpendicular to the plane defined by the scale element (1) and the location of the scale element due to a rotation around one of the two axes extending perpendicular to each other and in the plane of the scale element.

8. Measuring device according to one of claims 5 to 7, **characterized in that** the interferometric sensor system has at least three sensor heads.

9. Positioning device with a positioning element and a measuring device according to one of the preceding claims 5 to 8, wherein the scale element (1) is arranged on the positioning element or is an integral part of the positioning element, and by means of the measuring device the position or the location or the position and location of the positioning element can be inferred.

## Revendications

1. Élément de mesure (1) pour un dispositif de mesure optique, qui comprend un codeur incrémental et un système de détection interférométrique, dans lequel l'élément de mesure (1) présente sur l'une de ses surfaces une couche réfléchissante (4) prévue pour coopérer avec le système de détection interférométrique, et l'élément de mesure (1) présente en outre une configuration de mesure (3) agencée dans une direction opposée à la couche réfléchissante (4), à distance de celle-ci, et prévue pour coopérer avec le codeur incrémental, dans lequel la configuration de mesure (3) est agencée à distance de la couche réfléchissante (4) de sorte que la configuration de mesure (3) ne produit aucune influence négative sur les signaux de mesure détectés au moyen du système de détection interférométrique, et la couche réfléchissante (4) est conçue de manière à être transparente à de la lumière présentant des longueurs d'onde déterminées et à avoir un effet réfléchissant pour de la lumière présentant d'autres longueurs d'onde.

2. Élément de mesure selon la revendication 1, **caractérisé en ce que** la configuration de mesure (3) est agencée sur la surface de l'élément de mesure (1) opposée à la surface munie de la couche réfléchissante (4).

3. Élément de mesure selon la revendication 1 ou 2, **caractérisé en ce que** l'élément de mesure (1) comprend un substrat (2) en un matériau vitreux.

4. Élément de mesure selon la revendication 1, **caractérisé en ce que** le substrat (2) est en verre saphir trempé.

5. Dispositif de mesure, en particulier destiné à la détection de haute précision de position et/ou de situation d'un élément de positionnement, présentant un codeur incrémental, un système de détection interférométrique et un élément de mesure selon l'une quelconque des revendications précédentes.

6. Dispositif de mesure selon la revendication 5, **caractérisé en ce que** le codeur incrémental comprend une tête de lecture, une première source de lumière permettant d'émettre de la lumière d'une première longueur d'onde, et la configuration de mesure (3), associée à la tête de lecture, de l'élément de mesure (1), et le système de détection interférométrique comprend une tête de détection, une seconde source de lumière permettant d'émettre de la lumière d'une seconde longueur d'onde, et la couche réfléchissante (4), associée à la tête de détection, de l'élément de mesure (1), dans lequel la couche réfléchissante (4) fait face à la fois à la tête de lecture et à la tête de détection, et la couche réfléchissante (4) est transparente à la lumière de la première longueur d'onde et a un effet réfléchissante pour la lumière de la seconde longueur d'onde, dans lequel le système de détection interférométrique utilise en vue de la mesure la lumière de la seconde longueur d'onde réfléchie par la couche réfléchissante (4) et détectée par la tête de détection, et le codeur incrémental utilise en vue de la mesure la lumière de la première longueur d'onde réfléchie par la configuration de mesure (3) et détectée par la tête de lecture.

7. Dispositif de mesure selon la revendication 6, **caractérisé en ce que** l'élément de mesure (1) est en forme de plaque et le codeur incrémental est conçu pour détecter la position et la situation de l'élément de mesure (1) à l'intérieur du plan défini par celui-ci, et le système de détection interférométrique est conçu pour détecter la position de l'élément de mesure (1) perpendiculairement au plan défini par celui-ci et la situation de l'élément de mesure suite à une rotation autour de l'un des deux axes s'étendant perpendiculairement l'un à l'autre dans le plan de l'élément de mesure.

8. Dispositif de mesure selon l'une quelconque des revendications 5 à 7, **caractérisé en ce que** le système de détection interférométrique présente au moins trois têtes de détection.

9. Dispositif de positionnement avec un élément de positionnement et un dispositif de mesure selon l'une quelconque des revendications 5 à 8 précédentes, dans lequel l'élément de mesure (1) est agencé au niveau de l'élément de positionnement ou fait partie intégrante de l'élément de positionnement et la position ou la situation ou la position et la situation de l'élément de positionnement peuvent être déterminées au moyen du dispositif de mesure.
